# EUROPEAN PATENT APPLICATION

(11) **EP 4 621 649 A1**
(43) Date of publication of application: **24.09.2025**
(21) Application number: 25164010.8
(22) Date of filing: 17.03.2025
(51) Int. Cl.: G06N 3/045, G06N 5/025, G06N 3/042, G06N 3/096

(54) **METHOD AND SYSTEM FOR EXTRACTING TACIT KNOWLEDGE FROM HISTORICAL DATA**

(30) Priority: 18.03.2024 IN 202421019966
(71) Applicant: Tata Consultancy Services Limited, Maharashtra (IN)
(72) Inventor: BHAT, Jyoti, 560066 Bengaluru, Karnataka (IN); BOSE, Nirban, 560066 Bengaluru, Karnataka (IN); KALELE, Amit, 411057 Pune, Maharashtra (IN); SUBBIAH, Ravindran, 695581 Trivandrum, Kerala (IN)
(74) Representative: Goddar, Heinz J.

(57) **Abstract**

Business rules are currently not documented and are present only as knowledge with subject matter experts (SMEs). The knowledge can be lost with time if it is not extracted or recorded. Existing techniques are unable to extract tacit knowledge and to retain the domain flavor in extracted information. Present disclosure provides a method and a system for extracting tacit knowledge from historical data. The system represents each point in historical data as a large dimensional hyperspace which contains all unstructured information where tacit knowledge can exist. Then, system maps large dimensional hyperspace to smaller dimensional hyperspace using pre-trained large language model (LLM). Thereafter, system, based on the series of downstream tasks, generates a feedback loop to optimally compute dimension of the smaller dimensional hyperspace. Once reduced dimensional space containing effective tacit knowledge information is available, system performs a downstream task based on the extracted tacit knowledge using another pre-trained LLM.

## Description

### CROSS-REFERENCE TO RELATED APPLICATIONS AND PRIORITY

The present application claims priority to Indian application no. 202421019966, filed on March 18, 2024.

### TECHNICAL FIELD

The disclosure herein generally relates to tacit knowledge extraction, and, more particularly, to a method and a system for extracting tacit knowledge from historical data.

### BACKGROUND

Tacit knowledge refers to skills, ideas and experiences that are possessed by people but are not codified and may not necessarily be easily expressed.

Every industry in almost every domain contains a huge volume of structured and unstructured data that carries the tacit knowledge of a domain expert. The implied intentions and business rules i.e., the tacit knowledge present in these data are never documented and is present only as knowledge with subject matter experts (SMEs)/domain experts. Hence, without extraction and recording, the information gets lost over time.

### SUMMARY

Embodiments of the present disclosure present technological improvements as solutions to one or more of the above-mentioned technical problems recognized by the inventors in conventional systems. For example, in one aspect, there is provided a method for extracting tacit knowledge from historical data. The method comprises receiving, by a system via one or more hardware processors, historical data associated with an enterprise and a task text associated with a downstream task to be performed from a source system; creating, by the system via the one or more hardware processors, a tacit knowledge store based, at least in part, on the received historical data and the task text, wherein the tacit knowledge store comprises a plurality of knowledge points, wherein the plurality of knowledge points comprises one or more of: a set of intents, one or more sub-intents, enterprise information, one or more conditional actions and one or more hierarchy of actions, wherein the plurality of knowledge points are constituted as a large dimensional hyperspace, and wherein each knowledge point in the large dimensional hyperspace represent a finite knowledge; iteratively performing: converting, by the system via the one or more hardware processors, the large dimensional hyperspace into a small dimensional hyperspace using a first pre-trained large language model (LLM), wherein the first pre-trained LLM selects one or more knowledge points from the plurality of knowledge points present in the large dimensional hyperspace based on one or more domain rules to create the small dimensional hyperspace from the large dimensional hyperspace, wherein the one or more domain rules are extracted from the historical data, and wherein the small dimensional hyperspace comprises the selected one or more knowledge points; performing, by the system via the one or more hardware processors, a downstream task based on the task text and the selected one or more knowledge points using a second pre-trained LLM, wherein the performed downstream task provides an output and a feedback; estimating, by the system via the one or more hardware processors, a quality score for the output using a quality estimation technique; checking, by the system via the one or more hardware processors, whether the quality score is less than a predefined quality threshold; upon determining that the quality score is less than the predefined quality threshold, extracting, by the system via the one or more hardware processors, one or more updated domain rules from the historical data; fine-tuning, by the system via the one or more hardware processors, the first pre-trained LLM and the second pre-trained LLM based on the one or more updated domain rules and the feedback to obtain a fine-tuned first pre-trained LLM and a fine-tuned second pre-trained LLM; and identifying, by the system via the one or more hardware processors, the one or more updated domain rules as the one or more domain rules, the fine-tuned first pre-trained LLM as the first pre-trained LLM, and the fine-tuned second pre-trained LLM as the second pre-trained LLM, until the quality score obtained is equivalent to the predefined quality threshold; and storing, by the system via the one or more hardware processors, the small dimensional hyperspace, the first pre-trained LLM and the second pre-trained LLM in a database.

In an embodiment, the method comprises: using, by the system via the one or more hardware processors, the stored small dimensional hyperspace, the first pre-trained LLM and the second pre-trained LLM to perform the downstream task upon receiving a new task text associated with the downstream task.

In an embodiment, wherein the one or more domain rules comprise one or more of: at least one seed condition, at least one seed prompt, and at least one seed hyperparameter.

In an embodiment, wherein the quality estimation technique comprises one of: similarity score calculation technique, readability consensus calculation technique, a succinctness score calculation technique, a relevance score calculation technique and maximum likelihood score calculation technique.

In another aspect, there is provided a system for extracting tacit knowledge from historical data. The system comprises a memory storing instructions; one or more communication interfaces; and one or more hardware processors coupled to the memory via the one or more communication interfaces, wherein the one or more hardware processors are configured by the instructions to: receive historical data associated with an enterprise and a task text associated with a downstream task to be performed from a source system; create a tacit knowledge store based, at least in part, on the received historical data and the task text, wherein the tacit knowledge store comprises a plurality of knowledge points, wherein the plurality of knowledge points comprises one or more of: a set of intents, one or more sub-intents, enterprise information, one or more conditional actions and one or more hierarchy of actions, wherein the plurality of knowledge points are constituted as a large dimensional hyperspace, and wherein each knowledge point in the large dimensional hyperspace represent a finite knowledge; iteratively perform: convert the large dimensional hyperspace into a small dimensional hyperspace using a first pre-trained large language model (LLM), wherein the first pre-trained LLM selects one or more knowledge points from the plurality of knowledge points present in the large dimensional hyperspace based on one or more domain rules to create the small dimensional hyperspace from the large dimensional hyperspace, wherein the one or more domain rules are extracted from the historical data, and wherein the small dimensional hyperspace comprises the selected one or more knowledge points; perform a downstream task based on the task text and the selected one or more knowledge points using a second pre-trained LLM, wherein the performed downstream task provides an output and a feedback; estimate a quality score for the output using a quality estimation technique; check whether the quality score is less than a predefined quality threshold; upon determining that the quality score is less than the predefined quality threshold, extract one or more updated domain rules from the historical data; fine-tune the first pre-trained LLM and the second pre-trained LLM based on the one or more updated domain rules and the feedback to obtain a fine-tuned first pre-trained LLM and a fine-tuned second pre-trained LLM; and identify the one or more updated domain rules as the one or more domain rules, the fine-tuned first pre-trained LLM as the first pre-trained LLM, and the fine-tuned second pre-trained LLM as the second pre-trained LLM, until the quality score obtained is equivalent to the predefined quality threshold; and store the small dimensional hyperspace, the first pre-trained LLM and the second pre-trained LLM in a database.

In yet another aspect, there are provided one or more non-transitory machine-readable information storage mediums comprising one or more instructions which when executed by one or more hardware processors extract tacit knowledge from historical data by receiving, by a system, historical data associated with an enterprise and a task text associated with a downstream task to be performed from a source system; creating, by the system, a tacit knowledge store based, at least in part, on the received historical data and the task text, wherein the tacit knowledge store comprises a plurality of knowledge points, wherein the plurality of knowledge points comprises one or more of: a set of intents, one or more sub-intents, enterprise information, one or more conditional actions and one or more hierarchy of actions, wherein the plurality of knowledge points are constituted as a large dimensional hyperspace, and wherein each knowledge point in the large dimensional hyperspace represent a finite knowledge; iteratively performing: converting, by the system, the large dimensional hyperspace into a small dimensional hyperspace using a first pre-trained large language model (LLM), wherein the first pre-trained LLM selects one or more knowledge points from the plurality of knowledge points present in the large dimensional hyperspace based on one or more domain rules to create the small dimensional hyperspace from the large dimensional hyperspace, wherein the one or more domain rules are extracted from the historical data, and wherein the small dimensional hyperspace comprises the selected one or more knowledge points; performing, by the system, a downstream task based on the task text and the selected one or more knowledge points using a second pre-trained LLM, wherein the performed downstream task provides an output and a feedback; estimating, by the system, a quality score for the output using a quality estimation technique; checking, by the system, whether the quality score is less than a predefined quality threshold; upon determining that the quality score is less than the predefined quality threshold, extracting, by the system, one or more updated domain rules from the historical data; fine-tuning, by the system, the first pre-trained LLM and the second pre-trained LLM based on the one or more updated domain rules and the feedback to obtain a fine-tuned first pre-trained LLM and a fine-tuned second pre-trained LLM; and identifying, by the system, the one or more updated domain rules as the one or more domain rules, the fine-tuned first pre-trained LLM as the first pre-trained LLM, and the fine-tuned second pre-trained LLM as the second pre-trained LLM, until the quality score obtained is equivalent to the predefined quality threshold; and storing, by the system, the small dimensional hyperspace, the first pre-trained LLM and the second pre-trained LLM in a database.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an example representation of an environment, related to at least some example embodiments of the present disclosure.
FIG. 2 illustrates an exemplary block diagram of a system for extracting tacit knowledge from historical data, in accordance with an embodiment of the present disclosure.
FIG. 3 illustrates a schematic block diagram representation of a tacit knowledge extraction process performed by the system of FIG. 2, in accordance with an embodiment of the present disclosure.
FIGS. 4A, 4B, and 4C collectively illustrate an exemplary flow diagram of a method for extracting tacit knowledge from historical data, in accordance with an embodiment of the present disclosure.
FIG. 5 illustrates a schematic block diagram representation of an exemplary downstream task performed by the system of FIG. 2, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As discussed earlier, business rules are currently not documented and are present only as knowledge with subject matter experts (SMEs). The knowledge can be lost with time if it is not extracted or recorded.

The information extraction techniques that are currently available are unable to extract tacit knowledge from historical data. Further, the available techniques are not able to retain the domain flavor in the extracted information i.e., they are unable to construct business/enterprise rules. Additionally, they don't work well with the unstructured data.

So, techniques that can efficiently capture tacit knowledge from unstructured data is still to be explored.

Embodiments of the present disclosure overcome the above-mentioned disadvantages by providing a method and a system for extracting tacit knowledge from historical data. The system of the present disclosure captures tacit knowledge by deciphering the business or enterprise rules, deciphering the problem-solution pair, decoding the emotions and intensions, etc., as an n-dimensional space. Further, the system represents each point in the n-dimensional space as a multi-dimensional hyperspace/large dimensional hyperspace which contains all the unstructured information where the tacit knowledge may exist. Then, the system maps the multidimensional hyperspace containing all the tacit knowledge points to a much smaller dimensional hyperspace using a pre-trained large language model (LLM). Thereafter, the system, based on the series of downstream tasks, generates a feedback loop to optimally compute the dimension of the smaller dimensional hyperspace. Once the reduced dimensional space i.e., the small dimensional hyperspace containing all the effective tacit knowledge information is available, the system performs a downstream task using the extracted tacit knowledge.

In the present disclosure, the system and the method converts the large dimensional hyperspace into a reduced dimensional hyperspace by selectively choosing effective knowledge points from the plurality of knowledge points using the pre-trained fine-tuned LLM, thereby ensuring accurate extraction of the business or enterprise rules, the problem-solution pair, and the emotions and intensions as the information associated with a downstream task is only considered for further processing while discarding all other information that is present in the historical data. The effective knowledge point extraction also ensures that the extracted tacit knowledge preserves all the rules, standards and essence of a domain. Further, the system performs analysis of the selective data, thereby reducing the overall time taken and the computing resources utilized in performing the tacit knowledge extraction. Additionally, the system is capable of reading between the lines to decipher the human emotions and intensions present in the historical data.

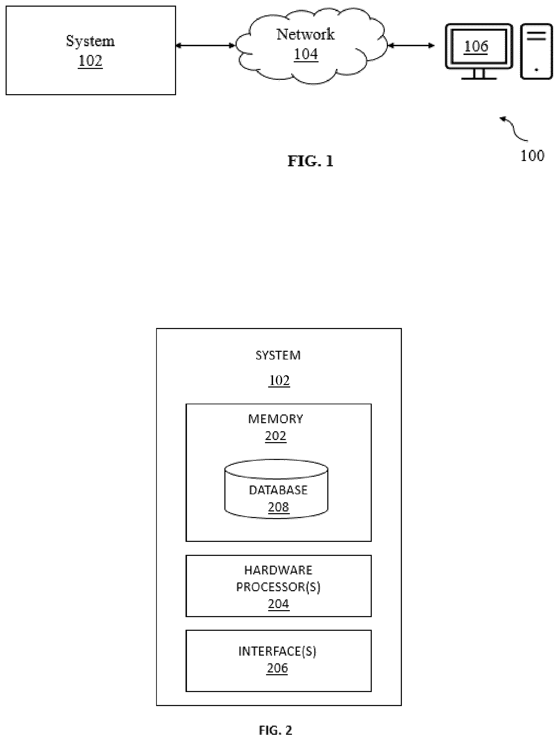

Referring now to the drawings, and more particularly to FIGS. 1 through 5, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, creating tacit knowledge store, converting a large dimensional hyperspace into a small dimensional hyperspace, etc. The environment 100 generally includes a system 102, an electronic device 106 (hereinafter also referred as a source system 106), each coupled to, and in communication with (and/or with access to) a network 104. It should be noted that one source system is shown for the sake of explanation; there can be more number of source systems.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The source system 106 is associated with an enterprise who is interested in documenting tacit knowledge. Examples of the source system 106 include, but are not limited to, a personal computer (PC), a mobile phone, a tablet device, a Personal Digital Assistant (PDA), a server, a voice activated assistant, a smartphone, and a laptop.

The system 102 includes one or more hardware processors and a memory. The system 102 is first configured to receive historical data associated with an enterprise and a task text associated with a downstream task to be performed from a source system. The received information is then utilized by the system 102 to create a tacit knowledge store that includes a plurality of knowledge points that are constituted as a large dimensional hyperspace. The system 102 then reduces the large dimensional hyperspace into a small dimensional hyperspace using a first pre-trained large language model (LLM). Thereafter, the system 102 utilizes the small dimensional hyperspace to perform a downstream task based on the received task text using a second pre-trained LLM. Further, the system evaluates a quality of an output of the downstream task.

Upon determining that the output quality is not equivalent to a desired output quality, the system 102 performs fine-tuning of the first pre-trained LLM and the second pre-trained LLM based on updated domain rules, until the system 102 obtains the desired output quality. In particular, the system 102 performs an iterative process to improve the output quality of the downstream task performed. The system 102 then stores the small dimensional hyperspace, the first pre-trained LLM and the second pre-trained LLM in a database so that it can be utilized for capturing tacit knowledge form the unstructured data (where the tacit knowledge mat exist) by the enterprise.

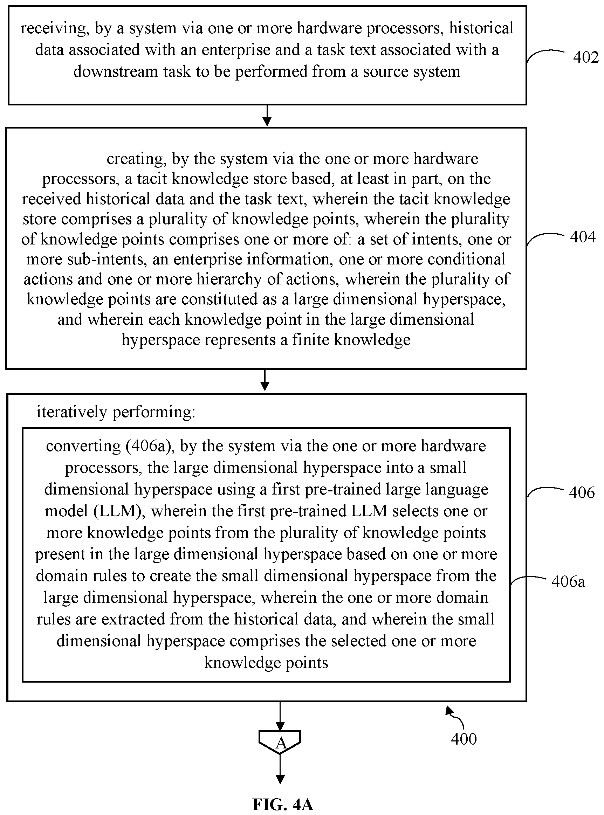

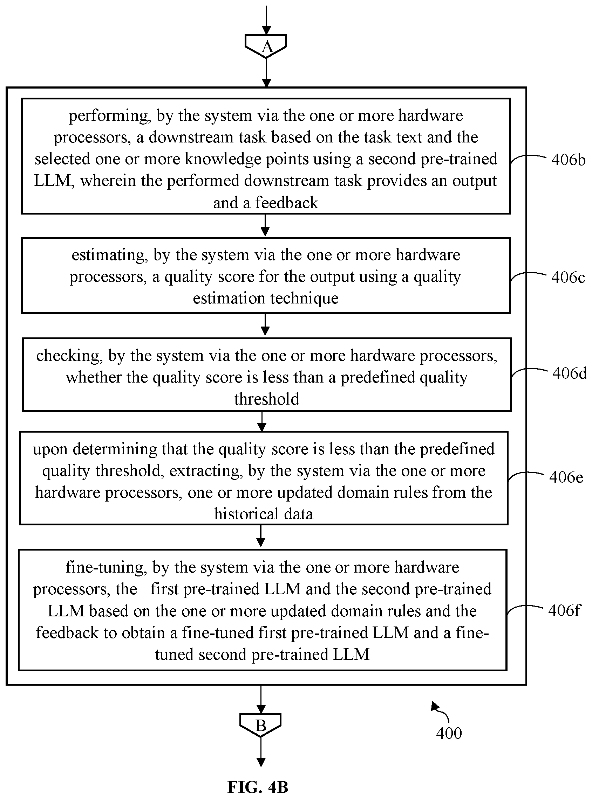

The process of extracting tacit knowledge is explained in detail with reference to FIGS. 4A and 4B.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the system 102 for extracting tacit knowledge from historical data, in accordance with an embodiment of the present disclosure. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, the small dimensional hyperspace, the first pre-trained LLM, the second pre-trained LLM, a predefined quality threshold, a quality estimation technique, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

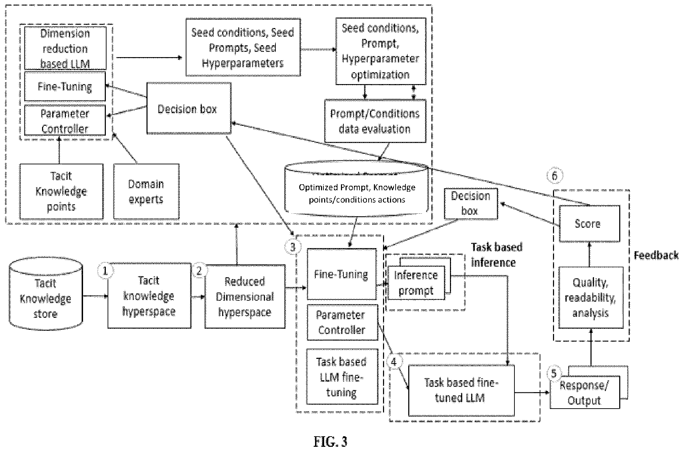

FIG. 3 illustrates a schematic block diagram representation of a tacit knowledge extraction process performed by the system 102, in accordance with an embodiment of the present disclosure.

As seen in FIG. 3, the system 102 first receives the historical data associated with an enterprise. The historical data may include, but are not limited to, emails, documents, transcripts, reports, clinical documents and the like. The system 102 then creates a tacit knowledge store. Then, the system 102 creates a large dimensional tacit knowledge hyperspace. Thereafter, the system 102 creates a reduced dimensional tacit knowledge hyperspace using a pre-trained LLM. Further, the system 102 uses another pre-trained LLM to perform a task based on the reduced dimensional tacit knowledge hyperspace and a task based prompt.

The system 102 then evaluates a response/output of the task by estimating a quality score. Thereafter, the quality score is compared with a predefined quality threshold. Upon determining that the quality score is less than the predefined quality threshold, the system 102 fine-tunes the pre-trained LLM models.

As part of fine-tuning, the system 102 updates the seed conditions, seed prompts, and seed hyperparameters to obtain optimized prompts and knowledge points/conditions actions, etc.

The system 102 then uses the fine-tuned LLMs to perform the task. And the same process is repeated until the fine-tuned LLMs start giving the desired result i.e., the quality score obtained for the task is equivalent to the predefined quality threshold. In particular, the quality score is either equivalent or more than the predefined quality threshold.

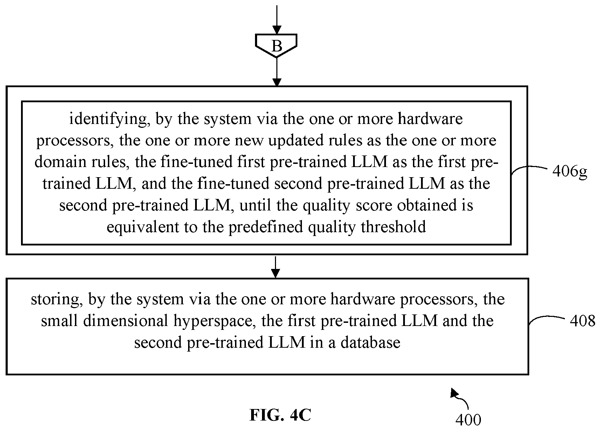

FIGS. 4A, 4B and 4C, collectively, with reference to FIGS. 1 to 3, represent an exemplary flow diagram of a method 400 for extracting tacit knowledge from historical data, in accordance with an embodiment of the present disclosure. The method 400 may use the system 102 of FIGS. 1 and 2 for execution. In an embodiment, the system 102 comprises one or more data storage devices or the memory 208 operatively coupled to the one or more hardware processors 206 and is configured to store instructions for execution of steps of the method 400 by the one or more hardware processors 206. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 402 of the present disclosure, the one or more hardware processors 206 of the system 102 receive historical data associated with an enterprise and a task text associated with a downstream task to be performed from a source system, such as the source system 106 associated with the enterprise. In an embodiment, the historical data may include emails, reports, conversations, transcripts or any other textual data/tabular data or combination of both. In an embodiment, the task text represents a task to be performed by the system 102. An example of the task text can be 'Generate a reply for the email by answering the query'.

At step 404 of the present disclosure, the one or more hardware processors 206 of the system 102 create a tacit knowledge store, based, at least in part, on the received historical data and the task text. In one embodiment, the tacit knowledge store is created using the historical data received from unstructured data sources like the email, reports, conversations, transcripts or any other textual data/tabular data where the tacit knowledge may exist. An example of the knowledge store, without limiting the scope of the embodiments disclosed herein, can be a customer email aimed towards a customer representative or set of handwritten reports in case of Clinical Study Report (CSR) generation. An example representation of the tacit knowledge store created based on the customer email aimed towards the customer representative is shown below:
'Dear *** team This tracking number : ####### My goods sender, I have applied for two address changes. May I ask why they have not been delivered according to my changed address? What is the problem with ***? Please deliver to the following address: Address: ######### Please deliver according to the order address. This is caused by *** error, and we will not bear any subsequent costs'.

The tacit knowledge store includes a plurality of knowledge points as there are multiple knowledge points that can be constructed out of the created knowledge store. In an embodiment, the plurality of knowledge points includes one or more of a set of intents, one or more sub-intents, enterprise information, one or more conditional actions and one or more hierarchy of actions. An example of the plurality of knowledge points that can be constructed from the tacit knowledge store (shown with reference to previous example) is shown below.
Knowledge points : [Address issue, tracking number, caused by, any subsequent costs, order address, have not been delivered, ............ ].

The plurality of knowledge points are constituted as a large dimensional hyperspace and each knowledge point in the large dimensional hyperspace represent a finite knowledge.

At step 406 of the present disclosure, the one or more hardware processors 206 of the system 102 perform fine-tuning of one or more pre-trained large language models (LLMs) by iteratively performing a plurality of steps 406a through 406g until a quality score of a task performed by the system 102 is equivalent to the predefined quality threshold.

More specifically, at step 406a of the present disclosure, the one or more hardware processors 204 of the system 102 converts the large dimensional hyperspace into a small dimensional hyperspace using a first pre-trained large language model (LLM). Examples of the first pre-trained LLM that can be used include, but are not limited to, flan-T5-base, flan-T5-large, flan-T5-XL,gpt-3, gpt-3.5, Claude, Titan and the like.

In an embodiment, the first pre-trained LLM selects one or more knowledge points from the plurality of knowledge points present in the large dimensional hyperspace based on one or more domain rules to create the small dimensional hyperspace from the large dimensional hyperspace. The one or more domain rules are extracted from the historical data. In an embodiment, the one or more domain rules comprise one or more of at least one seed condition, at least one seed prompt, and at least one seed hyperparameter.

In particular, out of the plurality of knowledge points, there can be some important knowledge points which may play a crucial role in decision making while some can be irrelevant knowledge points as they may not contribute to decision making while performing the task. So, a set of decision making knowledge points may be referred as 'effective knowledge points'.

The first pre-trained LLM selects one or more knowledge points (i.e., the effective knowledge points) from the plurality of knowledge points present in the large dimensional hyperspace based on one or more domain rules to create the small dimensional hyperspace from the large dimensional hyperspace. The small dimensional hyperspace comprises the selected one or more knowledge points. An example of the knowledge points that can selected from the plurality of knowledge points is shown below:
Selected Knowledge Points: [Address issue, delivery problem, Tracking number]

In at least one example embodiment, the first pre-trained LLM learns to generate the optimal seed conditions, the optimal seed prompts and the optimal seed hyperparameters. So, in a first iteration, the first pre-trained LLM may generate the seed conditions, seed prompts and seed hyperparameters. At the 0^{th} iterations, the seed knowledge points, seed prompts and seed hyperparameters may be the optimal ones. For other iterations, when a feedback of a performed downstream task is available, the system 102 may use the updated seed conditions, seed prompts and seed hyperparameters obtained after fine-tuning of the first pre-trained LLM.

At step 406b of the present disclosure, the one or more hardware processors 206 of the system 102 perform a downstream task based on the task text and the selected one or more knowledge points using a second pre-trained LLM. An example of the downstream task can be 'The email needs to be analyzed and based on the problem-action rule, a reply for the customer needs to be constructed'.

Examples of the second pre-trained LLM that can be used include, but are not limited to, flan-T5-base, flan-T5-large, flan-T5-XL,gpt-3, gpt-3.5, Claude, Titan and the like.

When the selected one or more knowledge points are available, the second pre-trained LLM uses the task text (i.e., a task based prompt) and the selected one or more knowledge points to perform the downstream task. Examples of the downstream task that can be performed may include, but are not limited to, question answering, report generation, email-response, ticket closure etc. The performed downstream task provides an output and a feedback.

An example representation of the output obtained from the performed downstream task is shown below:
"Hello ***, thank you for contacting *** team. I am sorry to hear about your inconvenience. The address change takes two to five working days to get reflected in the system and probably that is the reason for the package not being delivered in time. I request you to check in the status after two working days. Thank you"

At step 406c of the present disclosure, the one or more hardware processors 206 of the system 102 estimate a quality score for the output using a quality estimation technique. In particular, the quality score is estimated based on the output to judge the quality of output. In one embodiment, the score can be estimated by user as well.

Examples of the quality estimation technique that can be used include, but are not limited to, a similarity score calculation technique, a readability consensus calculation technique, a succinctness score calculation technique, a relevance score calculation technique and a maximum likelihood score calculation technique. The quality estimation technique used by the system 102 can change based on the downstream task to be performed.

At step 406d of the present disclosure, the one or more hardware processors 206 of the system 102 check whether the quality score is less than a predefined quality threshold. In at least one example embodiment, the predefined quality threshold may be defined by the subject matter experts.

At step 406e of the present disclosure, the one or more hardware processors 206 of the system 102 extracts one or more updated domain rules from the historical data upon determining that the quality score is less than the predefined quality threshold. In particular, the at least one seed condition, the at least one seed prompt, and the at least one seed hyperparameter are updated.

At step 406f of the present disclosure, the one or more hardware processors 206 of the system 102 fine-tune the first pre-trained LLM and the second pre-trained LLM based on the one or more updated domain rules and the feedback to obtain a fine-tuned first pre-trained LLM and a fine-tuned second pre-trained LLM.

In at least one example embodiment, the system 102, instead of fine-tuning, may optimize the seed hyperparameters via Bayesian optimization.

At step 406g of the present disclosure, the one or more hardware processors 206 of the system 102 identify the one or more updated domain rules as the one or more domain rules, the fine-tuned first pre-trained LLM as the first pre-trained LLM, and the fine-tuned second pre-trained LLM as the second pre-trained LLM until the quality score obtained is equivalent to the predefined quality threshold. In particular, the updated domain rules, the fine-tuned first pre-trained LLM and the fine-tuned second pre-trained LLM are used to iteratively perform the steps from 406a-40f until the quality score attains the predefined quality threshold.

At step 408 of the present disclosure, the one or more hardware processors 206 of the system 102 store the small dimensional hyperspace, the first pre-trained LLM and the second pre-trained LLM in a database, such as the database 208.

In an embodiment, the system uses the stored small dimensional hyperspace, the first pre-trained LLM and the second pre-trained LLM to perform the downstream task upon receiving a new task text associated with the downstream task.

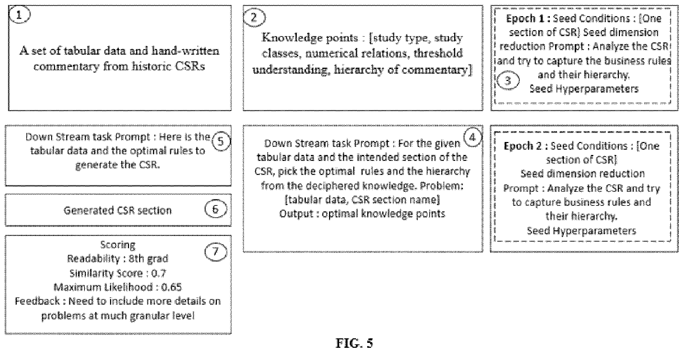

FIG. 5 illustrates a schematic block diagram representation of an exemplary downstream task performed by the system 102, in accordance with an embodiment of the present disclosure.

As seen in FIG.5, the system receives the historical data comprising hand-written commentary from historic CSRs as an input by the system 102. The system then determines the plurality of knowledge points from the historical data to create a large dimensional hyperspace. Thereafter, the system 102 converts the large dimensional hyperspace into a small dimensional hyperspace.

Based on the small dimensional hyperspace, the system 102 then performs the downstream task based on a downstream task prompt. Thereafter, a quality score of the output of the downstream task is estimated which is then compared with a predefined quality threshold. Further, based on the feedback and the output, the system 102 may fine-tune the pre-trained LLMs. And the process may be repeated again and again until the quality score attain the predefined quality threshold.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, existing information extraction techniques are unable to extract tacit knowledge from historical data. Further, the techniques are not able to retain the domain flavor in the extracted information. So, to overcome the disadvantages, embodiments of the present disclosure provide a method and a system for extracting tacit knowledge from historical data. More specifically, the system and the method converts the large dimensional hyperspace into a reduced dimensional hyperspace by selectively choosing effective knowledge points from the plurality of knowledge points using the pre-trained fine-tuned LLM, thereby ensuring accurate extraction of the business or enterprise rules, the problem-solution pair, and the emotions and intensions as the information associated with a downstream task is only considered for further processing while discarding all other information that is present in the historical data. The effective knowledge point extraction also ensures that the extracted tacit knowledge preserves all the rules, standards and essence of a domain. Further, the system performs analysis of the selective data, thereby reducing the overall time taken and the computing resources utilized in performing the tacit knowledge extraction. Additionally, the system is capable of reading between the lines to decipher the human emotions and intensions present in the historical data.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (400), comprising:
receiving (402), by a system via one or more hardware processors, historical data associated with an enterprise and a task text associated with a downstream task to be performed from a source system;
creating (404), by the system via the one or more hardware processors, a tacit knowledge store, based, at least in part, on the received historical data and the task text, wherein the tacit knowledge store comprises a plurality of knowledge points, wherein the plurality of knowledge points comprises one or more of: a set of intents, one or more sub-intents, an enterprise information, one or more conditional actions, and one or more hierarchy of actions, wherein the plurality of knowledge points are constituted as a large dimensional hyperspace, and wherein each knowledge point in the large dimensional hyperspace represents a finite knowledge;
iteratively performing (406):
converting (406a), by the system via the one or more hardware processors, the large dimensional hyperspace into a small dimensional hyperspace using a first pre-trained large language model (LLM), wherein the first pre-trained LLM selects one or more knowledge points from the plurality of knowledge points present in the large dimensional hyperspace based on one or more domain rules to create the small dimensional hyperspace from the large dimensional hyperspace, wherein the one or more domain rules are extracted from the historical data, and wherein the small dimensional hyperspace comprises the selected one or more knowledge points;
performing (406b), by the system via the one or more hardware processors, a downstream task based on the task text and the selected one or more knowledge points using a second pre-trained LLM, wherein the performed downstream task provides an output and a feedback;
estimating (406c), by the system via the one or more hardware processors, a quality score for the output using a quality estimation technique;
checking (406d), by the system via the one or more hardware processors, whether the quality score is less than a predefined quality threshold;
upon determining that the quality score is less than the predefined quality threshold, extracting (406e), by the system via the one or more hardware processors, one or more updated domain rules from the historical data;
fine-tuning (406f), by the system via the one or more hardware processors, the first pre-trained LLM and the second pre-trained LLM based on the one or more updated domain rules and the feedback to obtain a fine-tuned first pre-trained LLM and a fine-tuned second pre-trained LLM; and
identifying (406g), by the system via the one or more hardware processors, the one or more updated domain rules as the one or more domain rules, the fine-tuned first pre-trained LLM as the first pre-trained LLM, and the fine-tuned second pre-trained LLM as the second pre-trained LLM,
until the quality score obtained is equivalent to the predefined quality threshold; and
storing (408), by the system via the one or more hardware processors, the small dimensional hyperspace, the first pre-trained LLM, and the second pre-trained LLM in a database.

2. The processor implemented method (400) as claimed in claim 1, comprising:
using, by the system via the one or more hardware processors, the stored small dimensional hyperspace, the first pre-trained LLM, and the second pre-trained LLM to perform the downstream task upon receiving a new task text associated with the downstream task.

3. The processor implemented method (400) as claimed in claim 1, wherein the one or more domain rules comprise one or more of: at least one seed condition, at least one seed prompt, and at least one seed hyperparameter.

4. The processor implemented method (400) as claimed in claim 1, wherein the quality estimation technique comprises one of: a similarity score calculation technique, a readability consensus calculation technique, a succinctness score calculation technique, a relevance score calculation technique, and a maximum likelihood score calculation technique.

5. A system (102), comprising:
a memory (202) storing instructions;
one or more communication interfaces (206); and
one or more hardware processors (204) coupled to the memory (202) via the one or more communication interfaces (206), wherein the one or more hardware processors (204) are configured by the instructions to:
receive historical data associated with an enterprise and a task text associated with a downstream task to be performed from a source system;
create a tacit knowledge store based, at least in part, on the received historical data and the task text, wherein the tacit knowledge store comprises a plurality of knowledge points, wherein the plurality of knowledge points comprises one or more of: a set of intents, one or more sub-intents, an enterprise information, one or more conditional actions and one or more hierarchy of actions, wherein the plurality of knowledge points are constituted as a large dimensional hyperspace, and wherein each knowledge point in the large dimensional hyperspace represents a finite knowledge;
iteratively perform:
convert the large dimensional hyperspace into a small dimensional hyperspace using a first pre-trained large language model (LLM), wherein the first pre-trained LLM selects one or more knowledge points from the plurality of knowledge points present in the large dimensional hyperspace based on one or more domain rules to create the small dimensional hyperspace from the large dimensional hyperspace, wherein the one or more domain rules are extracted from the historical data, and wherein the small dimensional hyperspace comprises the selected one or more knowledge points;
perform a downstream task based on the task text and the selected one or more knowledge points using a second pre-trained LLM, wherein the performed downstream task provides an output and a feedback;
estimate a quality score for the output using a quality estimation technique;
check whether the quality score is less than a predefined quality threshold;
upon determining that the quality score is less than the predefined quality threshold, extract one or more updated domain rules from the historical data;
fine-tune the first pre-trained LLM and the second pre-trained LLM based on the one or more updated domain rules and the feedback to obtain a fine-tuned first pre-trained LLM and a fine-tuned second pre-trained LLM; and
identify the one or more updated domain rules as the one or more domain rules, the fine-tuned first pre-trained LLM as the first pre-trained LLM, and the fine-tuned second pre-trained LLM as the second pre-trained LLM,
until the quality score obtained is equivalent to the predefined quality threshold; and
store the small dimensional hyperspace, the first pre-trained LLM and the second pre-trained LLM in a database.

6. The system as claimed in claim 5, wherein the one or more hardware processors are further configured by the instructions to:
use the stored small dimensional hyperspace, the first pre-trained LLM and the second pre-trained LLM to perform the downstream task upon receiving a new task text associated with the downstream task.

7. The system as claimed in claim 5, wherein the one or more domain rules comprise one or more of: at least one seed condition, at least one seed prompt, and at least one seed hyperparameter.

8. The system as claimed in claim 5, wherein the quality estimation technique comprises one of: a similarity score calculation technique, a readability consensus calculation technique, a succinctness score calculation technique, a relevance score calculation technique, and a maximum likelihood score calculation technique.

9. One or more non-transitory machine-readable information storage mediums comprising one or more instructions which when executed by one or more hardware processors cause:
receiving historical data associated with an enterprise and a task text associated with a downstream task to be performed from a source system;
creating a tacit knowledge store, based, at least in part, on the received historical data and the task text, wherein the tacit knowledge store comprises a plurality of knowledge points, wherein the plurality of knowledge points comprises one or more of: a set of intents, one or more sub-intents, an enterprise information, one or more conditional actions, and one or more hierarchy of actions, wherein the plurality of knowledge points are constituted as a large dimensional hyperspace, and wherein each knowledge point in the large dimensional hyperspace represents a finite knowledge;
iteratively performing:
converting the large dimensional hyperspace into a small dimensional hyperspace using a first pre-trained large language model (LLM), wherein the first pre-trained LLM selects one or more knowledge points from the plurality of knowledge points present in the large dimensional hyperspace based on one or more domain rules to create the small dimensional hyperspace from the large dimensional hyperspace, wherein the one or more domain rules are extracted from the historical data, and wherein the small dimensional hyperspace comprises the selected one or more knowledge points;
performing a downstream task based on the task text and the selected one or
more knowledge points using a second pre-trained LLM, wherein the performed downstream task provides an output and a feedback;
estimating a quality score for the output using a quality estimation technique;
checking, by the system, whether the quality score is less than a predefined quality threshold;
upon determining that the quality score is less than the predefined quality threshold, extracting one or more updated domain rules from the historical data;
fine-tuning the first pre-trained LLM and the second pre-trained LLM based on the one or more updated domain rules and the feedback to obtain a fine-tuned first pre-trained LLM and a fine-tuned second pre-trained LLM, and
identifying, by the system, the one or more updated domain rules as the one or
more domain rules, the fine-tuned first pre-trained LLM as the first pre-trained LLM, and the fine-tuned second pre-trained LLM as the second pre-trained LLM,
until the quality score obtained is equivalent to the predefined quality threshold, and
storing the small dimensional hyperspace, the first pre-trained LLM, and the second pre-trained LLM in a database.

10. The one or more non-transitory machine-readable information storage mediums as claimed in claim 9,
using the stored small dimensional hyperspace, the first pre-trained LLM, and the second pre-trained LLM to perform the downstream task upon receiving a new task text associated with the downstream task.

11. The one or more non-transitory machine-readable information storage mediums as claimed in claim 9, wherein the one or more domain rules comprise one or more of: at least one seed condition, at least one seed prompt, and at least one seed hyperparameter.

12. The one or more non-transitory machine-readable information storage mediums as claimed in claim 9, wherein the quality estimation technique comprises one of: a similarity score calculation technique, a readability consensus calculation technique, a succinctness score calculation technique, a relevance score calculation technique, and a maximum likelihood score calculation technique.
